# EUROPÄISCHE PATENTSCHRIFT

(11) **EP 0 912 225 B1**
(45) Veröffentlichungstag und Bekanntmachung des Hinweises auf die Patenterteilung: **16.08.2000**
(21) Anmeldenummer: 98906923.2
(22) Anmeldetag: 06.02.1998
(51) Int. Cl.: B01D 29/11, B01D 46/24, B01D 46/52

(54) **SCHEIBE, INSBESONDERE STIRNSCHEIBE EINES FILTEREINSATZES**
DISK, IN PARTICULAR THE FRONT DISK OF A FILTER ELEMENT
DISQUE, EN PARTICULIER DISQUE FRONTAL, D'UNE CARTOUCHE FILTRANTE

(30) Priorität: 20.02.1997 DE 19706921
(43) Veröffentlichungstag der Anmeldung: 06.05.1999
(73) Patentinhaber: Ing. Walter Hengst GmbH & Co. KG, 48147 Münster (DE)
(72) Erfinder: BAUMANN, Dieter, D-48268 Greven (DE)
(74) Vertreter: Schulze Horn & Partner
(86) Internationale Anmeldenummer: EP9800638
(87) Internationale Veröffentlichungsnummer: WO9836817

(56) Entgegenhaltungen:
- EP-A- 0 559 011
- DE-A- 4 416 577
- DE-C- 4 419 360

## Beschreibung

Die vorliegende Erfindung betrifft eine Scheibe, insbesondere Stirnscheibe eines Filtereinsatzes, gemäß dem Oberbegriff des Anspruchs 1.

Eine Scheibe der genannten Art ist als Teil eines Filtereinsatzes aus der DE 44 16 577 A1 bekannt. Der Figur 6 dieser Schrift ist eine Scheibe entnehmbar, die in ihrem der Durchbrechung benachbarten Bereich umlaufend geringfügig verdickt ist und in diesem verdickten Bereich mit der Dichtung thermisch verschweißt ist. Die Verschweissung erstreckt sich hier über annähernd den gesamten Oberflächenbereich der Verdickung; radial innen im Bereich der Durchbrechung steht die Dichtung so weit vor, daß sie nach dem Aufstecken der Scheibe auf einen Anschlußstutzen durch diesen gestaucht und somit verdichtet ist, wodurch die gewünschte Dichtwirkung erzielt wird.

Mit dieser bekannten Scheiben-Dichtungs-Kombination konnte zwar mit relativ wenig Aufwand eine ausreichend sichere Abdichtung erzielt werden, jedoch hat sich in der Praxis herausgestellt, daß bei der Fertigung relativ enge Toleranzen eingehalten werden müssen, um einerseits eine ausreichend sichere Abdichtung zu gewährleisten und andererseits einen zu strammen Sitz der Scheibe auf dem Anschlußstutzen zu vermeiden, und daß es weiterhin wünschenswert wäre, die Fertigung der Scheiben durch Beschleunigung des Schweißvorganges bei der Verbindung von Scheibe und Dichtung noch wirtschaftlicher zu machen.

Zur Lösung dieser Aufgabe wird eine Scheibe der eingangs genannten Art vorgeschlagen, die dadurch gekennzeichnet ist,
- daß die Verdickung in Form eines in einem radialen Abstand nach außen versetzt um die Durchbrechung umlaufend an der Scheibe angeordneten Schweißwulstes ausgebildet ist,
- daß bei auf den Anschlußstutzen aufgesetzter Scheibe der Dichtring in seinem Bereich zwischen dem Anschlußstutzen und dem Schweißwulst verdichtet ist und
- daß außen erfolgende Stauchung und somit Komprimierung des Materials des Dichtringes erzeugten Verdichtungsbereich erzielt ist.

Mit dieser erfindungsgemäßen Scheibe werden mehrere Vorteile erreicht, nämlich zum einen eine verbesserte Dichtwirkung bei verminderten Ansprüchen an die bei der Fertigung einzuhaltenden Toleranzen und zum anderen eine schnellere Herstellbarkeit der Scheibe durch Verkürzung der erforderlichen Schweißzeit. Die verbesserte Dichtwirkung wird dadurch erzielt, daß der radial innere Bereich der Dichtung, der für die Abdichtung zuständig ist, sich über einen größeren radialen Bereich unabhängig von der Scheibe zwecks Verdichtung in Radialrichtung bewegen kann. Mit der erfindungsgemäßen Anordnung, insbesondere durch den radialen Abstand des Schweißwulstes von der Durchbrechung, wird ein räumlich definierter Verdichtungsbereich für den Dichtring geschaffen, wobei der Verdichtungsbereich in Radialrichtung der Scheibe betrachtet eine deutlich größere Erstreckung aufweist, als dies bei einer Scheibe gemäß dem Stand der Technik nach der eingangs gewürdigten Druckschrift mit dem an der Verdickung angebrachten Dichtring gegeben ist. Diese Vergrößerung des Verdichtungsbereiches in Radialrichtung der Scheibe sorgt einerseits für ein relativ leichtgängiges Aufsetzen und Abziehen der Scheibe von dem zugehörigen Anschlußstutzen und gewährleistet andererseits die gewünschte Abdichtung, ohne daß es zu einem die Leichtgängigkeit wieder zunichte machenden Einklemmen des Dichtringes zwischen Anschlußstutzen und Scheibe im Bereich ihrer Durchbrechung kommen kann. Überraschend ist dabei, daß trotz der relativ großen Entfernung des Bereiches der Schweißverbindung zwischen Scheibe und Dichtring vom inneren Rand des Dichtringes dieser zuverlässig dichtet. Da die Schweißverbindung sich auf den Bereich der Oberseite des Schweißwulstes beschränkt, ist der für die Verdichtung des Dichtringes in Radialrichtung zur Verfügung stehende Verdichtungsbereich exakt definiert, obwohl als Material für die Dichtung ein Kunststoffvlies oder -filz verwendet wird, das selbst eine relativ geringe Formbeständigkeit aufweist. Mit dem erfindungsgemäß vorgesehenen Schweißwulst wird aufgrund dessen relativ großer Höhe weiterhin erreicht, daß die Dichtwirkung zwischen dem Anschlußstutzen und der Scheibe unabhängig von der Aufsteckrichtung der Scheibe auf den Anschlußstutzen gewährleistet ist. Ein Umlegen des radial inneren Bereiches des Dichtringes und ein Einklemmen zwischen dem Außenumfang des Anschlußstutzens und dem Innenumfang der Scheibe ist zur Erzielung der gewünschten Dichtwirkung hier nicht erforderlich.

Bevorzugt ist in konkreter Ausgestaltung der Scheibe vorgesehen, daß der Schweißwulst an seiner der Durchbrechung zugewandten Flanke senkrecht zur Ebene der Scheibe verläuft. Diese Form des Schweißwulstes sorgt dafür, daß dessen Abstützwirkung gegenüber dem Dichtring bei dessen Verdichtung in Radialrichtung unabhängig von der Höhenlage konstant bleibt. Lediglich eine sehr geringe Entformungsschräge ist eventuell vorzusehen, wenn die Scheibe als Spritzgußteil hergestellt wird.

Eine bevorzugte Querschnittsform des Schweißwulstes der Scheibe ist die Rechteckform. Mit dieser Form wird bei minimalem Materialverbrauch für die Scheibe eine relativ große Fläche an der Oberseite des Schweißwulstes erzielt, die für die Verschweißung mit dem Dichtring benutzt wird.

Weiter ist bevorzugt vorgesehen, daß in Radialrichtung der Scheibe gesehen die Breite des Schweißwulstes zwischen 15 und 45 % der Breite des Dichtringes beträgt. Hiermit wird insbesondere erreicht, daß für die Herstellung der Schweißverbindung ein ausreichend großer Kontaktbereich zwischen dem Dichtring und der Scheibe zur Verfügung steht, wobei gleichzeitig aber auch der in Radialrichtung verdichtbare Teil des Dichtringes noch eine ausreichende Größe in Radialrichtung behält.

Weiter ist vorgesehen, daß der Dichtring so mit der Scheibe verschweißt ist, daß sich relativ zum Schweißwulst nach radial innen ein größerer Überstand des Dichtringes ergibt als nach radial außen. Auf diese Weise wird der radial innere, für die Dichtwirkung herangezogene Teil des Dichtringes relativ groß gehalten; der radial nach außen weisende, über den Schweißwulst ragende Überstand des Dichtringes dient lediglich zum Ausgleich von Maßtoleranzen auf Seiten des Dichtringes sowie zum Ausgleich von eventuellen Ungenauigkeiten beim Auflegen des Dichtringes auf den Schweißwulst vor dem Schweißvorgang. Für die Dichtwirkung hat der radial nach außen weisende Überstand des Dichtringes keine Funktion.

Um unerwünschtes Einklemmen von Teilen des radial inneren Bereiches des Dichtringes beim Aufstecken der Scheibe auf den Anschlußstutzen auszuschließen, ist vorgesehen, daß die Scheibe an ihrem die Durchbrechung begrenzenden Innenumfang von der die Verschweißung aufweisenden Seite ausgehend eine Ausrundung und/oder Abschrägung aufweist. Hiermit wird insbesondere erreicht, daß die Scheibe nicht zu fest auf dem Anschlußstutzen sitzt. Dies ist insbesondere dann wichtig, wenn die Scheibe Teil eines Filtereinsatzes ist, der mittels einer Klipsverbindung zum Deckel eines Filtergehäuses aus diesem bei einer Filterwartung herausgezogen werden soll. In diesem Anwendungsfall muß gewährleistet sein, daß die Reibungskraft zwischen der Scheibe mit ihrem Dichtring einerseits und dem Anschlußstutzen andererseits geringer bleibt als die von der Klipsverbindung zwischen dem Deckel und dem Filtereinsatz übertragbare Zugkraft.

Außerdem sieht die Erfindung vor, daß im Querschnitt gesehen der Dichtring im unbelasteten und unverschweißten Zustand eine Höhe in Axialrichtung aufweist, die mindestens 20 % seiner Breite in Radialrichtung beträgt. Durch diese relative Dimensionierung des Dichtringes wird insbesondere gewährleistet, daß die Dichtwirkung durch Stauchung und Verdichtung des radial inneren Bereiches des Dichtringes erreicht wird und daß gleichzeitig ein unerwünschtes Umklappen und Einklemmen des radial inneren Bereiches des Dichtringes ausgeschlossen wird.

Statt einstückig durchgehend kann der Schweißwulst in Umfangsrichtung gesehen auch alternativ aus mehreren aneinandergereihten Schweißwulst-Abschnitten gebildet sein. Diese Ausführung der Scheibe mit den aneinandergereihten Schweißwulst-Abschnitten kann insbesondere zweckmäßig sein, wenn die Scheibe im Spritzgußverfahren aus thermoplastischem Kunststoff hergestellt wird. Durch die Unterteilung des Schweißwulstes in Schweißwulst-Abschnitte, die voneinander getrennt, aber bevorzugt nur sehr gering beabstandet sind, werden Verformungen der Scheibe, wie sie ansonsten beim Abkühlen des Kunststoffes nach dem Spritzen auftreten könnten, vermieden. Auf diese Weise wird eine exakte Maßhaltigkeit der Scheibe sichergestellt. Auf die Funktion der Dichtung und auf die Abstützung des Dichtringes hat diese Unterteilung des Schweißwulstes keinen negativen Einfluß.

Ein Ausführungsbeispiel der Erfindung wird im folgenden anhand einer Zeichnung erläutert. Die Figuren der Zeichnung zeigen:
- Figur 1: eine Scheibe mit Dichtring vor dem Aufstecken der Scheibe auf einen Anschlußstutzen, in einem Teil-Querschnitt,
- Figur 2: die Scheibe aus Figur 1 nach dem Aufstecken auf den Anschlußstutzen, in gleicher Darstellung wie Figur 1, und
- Figur 3: die Scheibe nach dem Aufstecken auf einen Anschlußstutzen mit gegenüber Figur 2 umgekehrter Aufsteckrichtung, ebenfalls im Teil-Querschnitt.

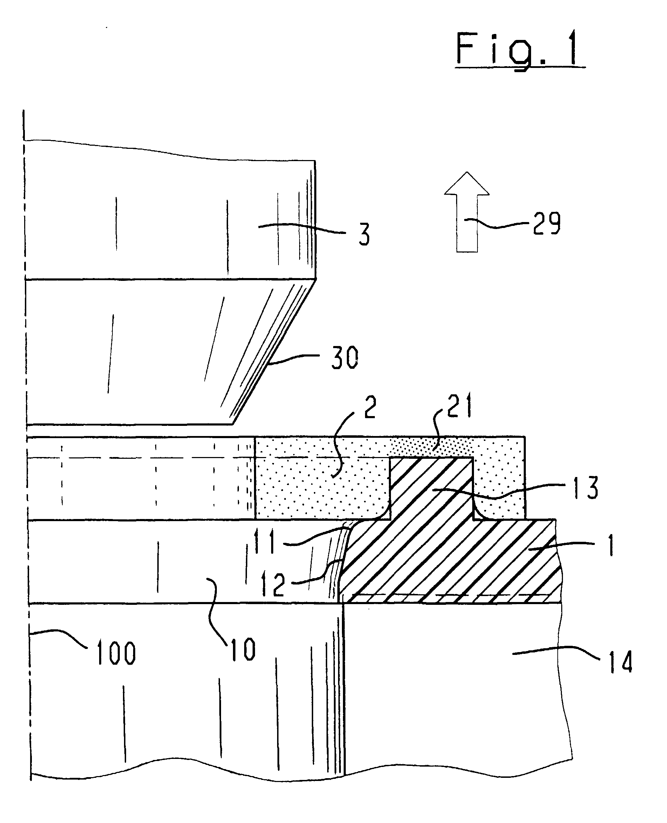

Figur 1 der Zeichnung zeigt im rechten unteren Teil einen Ausschnitt einer Scheibe 1, die Teil eines hier im übrigen nicht dargestellten Filtereinsatzes ist, der neben der Scheibe 1 noch einen Filterstoffkörper 14 umfaßt. Der Filterstoffkörper 14 erstreckt sich von der Scheibe 1 nach unten und ist mit der Scheibe 1 dichtend verbunden, vorzugsweise durch thermische Verschweißung. An dem in der Zeichnung nicht dargestellten unteren Ende des Filterstoffkörpers 14 ist in gleicher Weise eine weitere Scheibe angebracht, wie dies bei Filtereinsätzen üblich ist.

In ihrem Zentrum besitzt die Scheibe 1 eine Durchbrechung 10; die Durchbrechung 10 sowie die Scheibe 1 verlaufen rotationssymmetrisch zur Längsmittelachse 100.

An der in der Zeichnung nach oben weisenden Flachseite der Scheibe 1, die von dem Filterstoffkörper 14 abgewandt ist, erstreckt sich ein im Querschnitt rechteckiger Schweißwulst 13 nach oben, der einstückig mit der übrigen Scheibe 1 ausgeführt ist. Die Scheibe 1 einschließlich ihres Schweißwulstes 13 ist vorzugsweise ein Spritzgußteil aus thermoplastischem Kunststoff, beispielsweise Polyamid. Der Schweißwulst 13 kann in Umfangsrichtung der Scheibe 1 betrachtet ununterbrochen durchlaufend ausgeführt sein; alternativ kann der Schweißwulst 13 in Umfangsrichtung der Scheibe 1 gesehen auch aus mehreren aneinandergereihten Schweißwulst-Abschnitten zusammengesetzt sein, zwischen denen kurze Unterbrechungen liegen. Diese Unterbrechungen vermeiden ein Verziehen der Scheibe 1 bei ihrer Abkühlung nach dem Spritzgießvorgang.

Weiterhin ist an der Scheibe 1 eine Dichtung 2 angebracht, wobei die Verbindung zwischen Dichtung 2 und der Scheibe 1 im Bereich der Oberseite des Schweißwulstes 13 durch eine thermische Verschweißung 21 gebildet ist. Die Dichtung 2 hat die Form eines im Querschnitt flach-rechteckigen Kreisringes, wobei der Überstand in Richtung radial nach innen, d. h. in der Zeichnung nach links, größer ist als der Überstand radial nach außen, d. h. in der Zeichnung nach rechts, jeweils relativ zum Schweißwulst 13 gesehen.

Wie die Figur 1 weiter zeigt, ist der Schweißwulst 13 in einem radialen Abstand nach außen versetzt um die Durchbrechung 10 umlaufend an der Scheibe 1 angeordnet. Am Übergang von der Oberseite der Scheibe 1 radial innen vom Schweißwulst 13 in die Durchbrechung 10 befindet sich eine Ausrundung 11, die nach unten hin in eine Schräge 12 übergeht, die sich annähernd bis zur unteren Flachseite der Scheibe 1 erstreckt.

Links oben in Figur 1 ist der untere Teil eines Anschlußstutzens 3 erkennbar, der eine konische Einlaufschräge 30 aufweist. Auf diesen Anschlußstutzen 3 ist die Scheibe 1 bzw. der zugehörige Filtereinsatz in Richtung des Bewegungspfeiles 29 aufsteckbar.

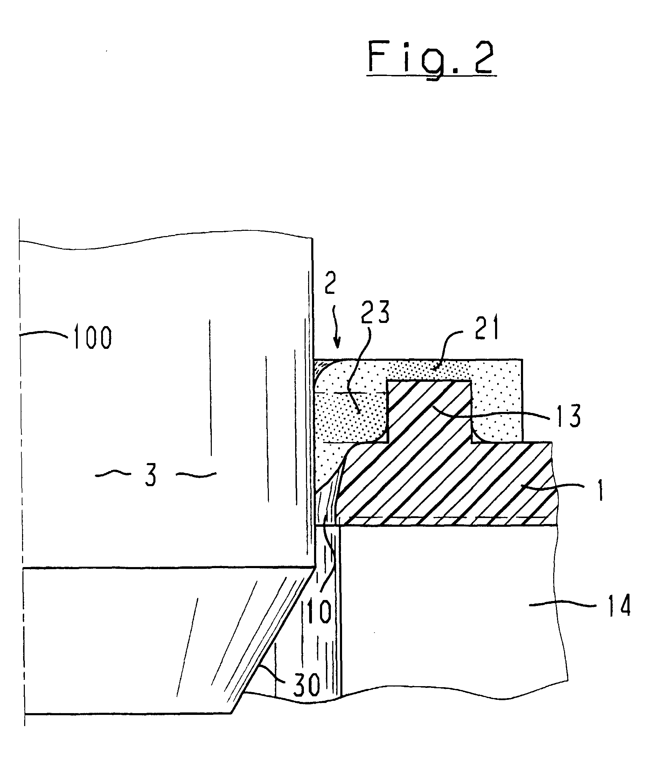

Den Zustand der Scheibe 1 mit ihrer Dichtung 2 nach dem Aufstecken auf den Anschlußstutzen 3 zeigt die Figur 2. Der Stutzen 3 ragt nun mit seinem konischen Ende 30 durch die Durchbrechung 10 hindurch in das Innere des Filterstoffkörpers 14. Zwischen dem Außenumfang des Anschlußstutzens 3 und der Scheibe 1 sorgt die Dichtung 2 für eine Abdichtung gegen einen Durchtritt von Medien durch den Spalt zwischen den genannten Teilen. Dieses Medium kann beispielsweise Kraftstoff oder Öl für eine Brennkraftmaschine sein.

Wie die Figur 2 verdeutlicht, wird der Dichtring 2 in seinem Bereich zwischen dem Anschlußstutzen 3 und dem Schweißwulst 13 verdichtet, was zeichnerisch durch eine erhöhte Dichte der Punktierung angedeutet ist. Außerdem wird der Dichtring 2 durch den Aufsteckvorgang in einem gewissen Maße deformiert, insbesondere an seinem radial inneren Umfangsbereich nach unten verschleppt. Dabei gelangt ein Teil des Dichtringes 2 in den Ringspalt zwischen dem Innenumfang der Scheibe 1 unterhalb des Schweißwulstes 13 und dem Außenumfang des Anschlußstutzens 3, wobei hier aber das Material des Dichtringes 2 nicht verdichtet wird und auch nicht zur Abdichtung beiträgt. In der Zeichnung ist dies durch eine geringere Punktdichte verdeutlicht. Die Abdichtwirkung wird durch den Verdichtungsbereich 23 erzielt, der wiederum durch im wesentlichen radial nach außen erfolgende Stauchung und somit Komprimierung des Materials des Dichtringes 2 in Höhe des Schweißwulstes 13 bewirkt wird.

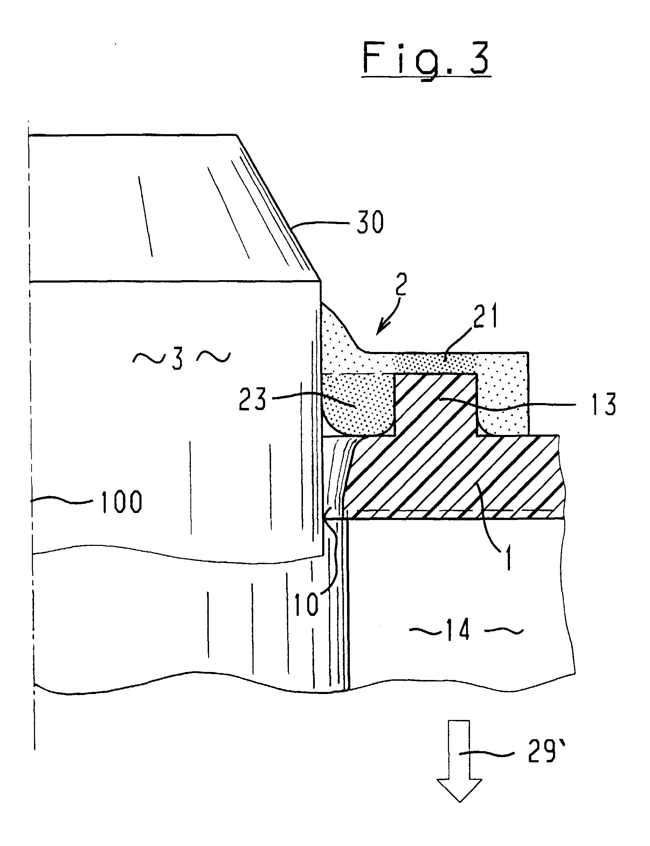

In Figur 3 der Zeichnung ist ein Anwendungsfall der Scheibe 1 bzw. des zugehörigen Filtereinsatzes dargestellt, bei dem ein Aufstecken der Scheibe 1 mit ihrem Dichtring 2 auf einen Anschlußstutzen 3 in zur Figur 1 und 2 entgegengesetzter Richtung im Sinne des Bewegungspfeiles 29' erfolgt ist. Hierbei wird die Scheibe 1 mit ihrer Dichtung 2 relativ zum Anschlußstutzen 3 so bewegt, daß das konische Ende 30 des Anschlußstutzens 3 von unten nach oben durch die Durchbrechung 10 hindurchtritt. Hierbei wird, wie die Figur 3 verdeutlicht, der radial innere Teil des Dichtringes 2 in einem gewissen Umfang nach oben mitgeschleppt; auch bei dieser Verwendung der Scheibe 1 mit ihrem Dichtring 2 erfolgt aber eine zuverlässige Abdichtung zwischen Scheibe 1 und Anschlußstutzen 3 durch den Dichtring 2. Auch in diesem Anwendungsfall wird der radial innere Bereich des Dichtringes 2 zwischen der zum Anschlußstutzen 3 weisenden Flanke des Schweißwulstes 13 und dem Außenumfang des Anschlußstutzens 3 in Radialrichtung komprimiert und bildet hier einen Verdichtungsbereich 23, der ausreichend mediumdicht ist. Die Scheibe 1 mit dem Schweißwulst 13 und die damit verschweißte Dichtung 2 unterscheiden sich nicht von der Konstruktion gemäß den Figuren 1 und 2.

## Patentansprüche

1. Scheibe (1), insbesondere Stirnscheibe eines Filtereinsatzes, mit einer mit einer Dichtung (2) versehenen Durchbrechung (10), mittels der die Scheibe (1) auf einen Anschlußstutzen (3) dichtend aufsteckbar ist, wobei die Scheibe (1) aus einem thermoplastischen Kunststoff besteht, wobei die Dichtung (2) ein Ring aus Kunststoffvlies oder -filz ist, der an einer der Flachseiten der Scheibe (1) mit dieser durch eine in radialem Abstand von der Durchbrechung (10) vorgesehene thermische Verschweißung (21) verbunden ist, wobei die Scheibe (1) an ihrer die Verschweissung (21) aufweisenden Seite einstückig mit einer aus der Ebene der Scheibe (1) aufragenden ringförmig umlaufenden Verdickung ausgebildet ist, deren Höhe mindestens 1/3 der Höhe des unbelasteten Dichtringes (2) beträgt und wobei die Verschweißung (21) zwischen dem Dichtring (2) und der Scheibe (1) sich räumlich auf den Bereich der Oberseite der Verdickung beschränkt,
**dadurch gekennzeichnet,**
- daß die Verdickung in Form eines in einem radialen Abstand nach außen versetzt um die Durchbrechung (10) umlaufend an der Scheibe (1) angeordneten Schweißwulstes (13) ausgebildet ist,
- daß bei auf den Anschlußstutzen (3) aufgesetzter Scheibe (1) der Dichtring (2) in seinem Bereich (23) zwischen dem Anschlußstutzen (3) und dem Schweißwulst (13) verdichtet ist und
- daß die Abdichtwirkung durch den durch radial nach außen erfolgende Stauchung und somit Komprimierung des Materials des Dichtringes (2) erzeugten Verdichtungsbereich (23) erzielt ist.

2. Scheibe nach Anspruch 1, dadurch gekennzeichnet, daß der Schweißwulst (13) an seiner der Durchbrechung (10) zugewandten Flanke senkrecht zur Ebene der Scheibe (1) verläuft.

3. Scheibe nach Anspruch 1 oder 2, dadurch gekennzeichnet, daß der Schweißwulst (13) im Querschnitt rechteckig ist.

4. Scheibe nach einem der vorangehenden Ansprüche, dadurch gekennzeichnet, daß in Radialrichtung der Scheibe (1) gesehen die Breite des Schweißwulstes (13) zwischen 15 und 45 % der Breite des Dichtringes (2) beträgt.

5. Scheibe nach einem der vorangehenden Ansprüche, dadurch gekennzeichnet, daß der Dichtring (2) so mit der Scheibe (1) verschweißt ist, daß sich relativ zum Schweißwulst (13) nach radial innen ein größerer Überstand des Dichtringes (2) ergibt als nach radial außen.

6. Scheibe nach einem der vorangehenden Ansprüche, dadurch gekennzeichnet, daß sie an ihrem die Durchbrechung (10) begrenzenden Innenumfang von der die Verschweißung aufweisenden Seite ausgehend eine Ausrundung (11) und/oder Abschrägung (12) aufweist.

7. Scheibe nach einem der vorangehenden Ansprüche, dadurch gekennzeichnet, daß im Querschnitt gesehen der Dichtring (2) im unbelasteten und unverschweißten Zustand eine Höhe in Axialrichtung aufweist, die mindestens 20 % seiner Breite in Radialrichtung beträgt.

8. Scheibe nach einem der vorangehenden Ansprüche, dadurch gekennzeichnet, daß der Schweißwulst (13) in Umfangsrichtung gesehen aus mehreren aneinandergereihten Schweißwulst-Abschnitten gebildet ist.

## Claims

1. A disk (1), in particular a front disk of a filter element with an aperture (10) provided with a sealing (2) with the disk (1) to be plugged onto a connection piece (3) through the aperture (10) wherein the disk (1) consists of a thermo-plastic material wherein the sealing (2) is a ring of plastic fleece or plastic felt which is connected to the disk (1) at one of the flat sides thereof by means of a thermal welding (21) radially spaced from the aperture (10) wherein the disk (1) at its side provided with the welding (21) is formed integral with an annular thickening projecting from the plane of the disk (1) with the height of the thickening being at least 1/3 of the height of the non-stressed sealing ring (2), and wherein the welding (21) between the sealing ring (2) and the disk (1) is spatially restricted to the area of the upper side of the thickening,
**characterized in**
- that the thickening is formed as a weld build-up (13) positioned continuously radially offset outwards around the aperture (10) at the disk (1),
- that at the disk (1) placed onto the connection piece (3) the sealing ring (2) is compressed in its area (23) between the connection piece (3) and the weld build-up (13), and
- that the sealing effect is attained by the compressed area (23) resulting from the radially outwards upsetting and thereby compressing the material of the sealing ring (2).

2. Disk according to claim 1, characterized in that the weld build-up (13) at its flange facing the aperture (10) extends perpendicularly to the plane of the disk (1).

3. Disk according to claim 1 or 2, characterized in that the weld build-up (13) is rectangular in the cross-section thereof.

4. Disk according to one of the preceeding claims, characterized in that as viewed in radial direction of the disk (1) the width of the weld build-up (13) is between 15 and 45 % of the width of the sealing ring (2).

5. Disk according to one of the preceeding claims, characterized in that the sealing ring (2) is welded to the disk (1) such that in relation to the weld build-up (13) it projects further radially to the inner side as it projects to the outer side.

6. Disk according to one of the preceeding claims, characterized in that at its inner circumference defining the aperture (10) extending from the side comprising the welding the disk comprises a rounding (11) and/or a bevelling (12).

7. Disk according to one of the preceeding claims, characterized in that as viewed in the cross-section the sealing ring (2) in its non-stressed and non-welded condition comprises a height in axial direction which is at least 20 % of its width in radial direction.

8. Disk according to one of the preceeding claims, characterized in that the weld build-up (13) as viewed in circumferential direction is formed of several weld build-up sections in series.

## Revendications

1. Disque (1), en particulier disque frontal d'une cartouche filtrante, comportant une découpure (10) qui est munie d'un élément d'étanchéité (2) et au moyen de laquelle le disque (1) peut être appliqué de manière étanche sur un raccord (3), dans lequel l'élément d'étanchéité (2) est un anneau en voile ou en feutre en matière synthétique qui est relié au disque, sur une des faces plates de ce dernier, par l'intermédiaire d'une soudure thermique (21) qui est prévue à une distance radiale de la découpure (10), dans lequel le disque (1) est conformé, en formant une seule pièce, sur sa face comportant la soudure thermique (21), avec une surépaisseur qui s'étend en forme d'anneau, qui fait saillie du plan du disque (1) et dont la hauteur est égale à au moins 1/3 de la hauteur de l'anneau d'étanchéité (2) à l'état non chargé et dans lequel la soudure thermique(21) est limitée dans l'espace entre l'anneau d'étanchéité (2) et le disque (1),
**caractérisé en ce que :**
- la surépaisseur est réalisée sous la forme d'un bourrelet de soudure (13) qui est décalé vers l'extérieur d'une distance radiale, qui entoure la découpure (10) et qui est disposé sur le disque (1),
- lorsque le disque (1) est mis en place sur le raccord 3, l'anneau d'étanchéité (2) est rendu étanche dans sa zone comprise entre le raccord (3) et le bourrelet de soudure (13) et
- l'effet d'étanchéité est obtenu au moyen de la zone d'étanchéité (23) produite par la déformation se produisant radialement vers l'extérieur et, de ce fait, par la compression, de la matière de l'anneau d'étanchéité (2).

2. Disque selon la revendication 1, caractérisé en ce que le bourrelet de soudure (13) s'étend perpendiculairement au plan de la disque (1) sur son flanc dirigé vers la découpure (10).

3. Disque selon la revendication 1 ou 2, caractérisé en ce que le bourrelet de soudure (13) présente, en section transversale, une forme rectangulaire.

4. Disque selon l'une quelconque des revendications précédentes, caractérisé en ce que, en regardant dans la direction radiale du disque (1), la largeur du bourrelet de soudure (13) a une valeur comprise entre 15 et 45 % de la largeur de l'anneau d'étanchéité (2).

5. Disque selon l'une quelconque des revendications précédentes, caractérisé en ce que l'anneau d'étanchéité (2) est soudé avec le disque (1) de telle manière qu'il en résulte, de manière relative, un plus grand porte à faux de l'anneau d'étanchéité (2) dans la direction radiale vers l'intérieur que dans la direction radiale vers l'extérieur.

6. Disque selon l'une quelconque des revendications précédentes, caractérisé en ce qu'il comporte, à sa périphérie intérieure délimitant la -découpure (10), en partant de sa face comportant la soudure, un arrondi (11) et/ou un chanfrein (12).

7. Disque selon l'une quelconque des revendications précédentes, caractérisé en ce que, vu en section transversale, l'anneau d'étanchéité (2) a, dans son état non chargé et non soudé, une hauteur en direction axiale qui vaut au moins 20 % de sa largeur dans la direction radiale.

8. Disque selon l'une quelconque des revendications précédentes, caractérisé en ce que le bourrelet de soudure (13) est constitué, en regardant dans la direction périphérique, de plusieurs sections de bourrelet de soudure disposées en alignement l'une à côté de l'autre.
